Europäisches Patentamt

(19) European Patent Office

Office européen des brevets

(11) Numéro de publication: **0 064 117**
**B1**

(12) **FASCICULE DE BREVET EUROPEEN**

(45) Date de publication du fascicule du brevet: **31.10.84**

(21) Numéro de dépôt: **81400719.1**

(22) Date de dépôt: **06.05.81**

(51) Int. Cl.³: **A 01 F 15/00, A 01 D 85/00**

(54) **Presse à balles cylindriques travaillant en continu.**

(43) Date de publication de la demande:
**10.11.82 Bulletin 82/45**

(45) Mention de la délivrance du brevet:
**31.10.84 Bulletin 84/44**

(84) Etats contractants désignés:
**DE FR GB IT NL**

(56) Documents cités:
**DE-A-2 848 777**
**FR-A-2 357 166**
**US-A-2 597 962**
**US-A-2 627 223**
**US-A-2 833 206**
**US-A-3 004 377**

(73) Titulaire: **JOHN DEERE (Société Anonyme)**
**8, Quai de la Madeleine**
**F-45000 Orléans (FR)**

(72) Inventeur: **Berthet, Jean-Paul**
**11, Faubourg Roch**
**F-70100 Arc-les-Gray (FR)**

(74) Mandataire: **Pruvost, Marc Henri et al**
**Cabinet ORES 6, Avenue de Messine**
**F-75008 Paris (FR)**

EP 0 064 117 B1

Courier Press, Leamington Spa, England.

## Description

La présente invention se rapporte d'une façon générale aux presses à balles cylindriques ou rondes du type comportant des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ par un ramasseur au cours de la progression de la presse et amenés en nappe à la chambre de formation de la balle. Lorsque la balle ainsi formée a atteint le diamètre requis, elle est soumise à une opération de liage, puis déchargée ou éjectée généralement par un système de porte prévu à l'arrière de la presse.

On comprend que les opérations de liage et d'éjection des balles formées dans la chambre de la presse exigent un certain laps de temps, pendant lequel la presse est à l'arrêt, ce qui réduit en conséquence le rendement d'une machine de ce type. Ainsi, dans une presse de type classique, la durée de l'opération de liage représente plus de la moitié du temps requis pour la formation d'une balle par enroulement. En outre, l'opérateur doit, avec les presses usuelles, commander le tracteur de manière à faire reculer la presse pour le déchargement de la balle sur le sol. Pour pouvoir refermer la porte arrière de celle-ci, il doit avancer jusqu'à l'origine de l'andain, refermer la porte, et reprendre l'opération de ramassage pour la formation d'une balle, de liage et de déchargement. Ceci exige de la part de l'opérateur de nombreuses manoeuvres à la fois de l'embrayage du tracteur et d'un sélecteur hydraulique ou autre, ainsi que de nombreuses commandes de l'arbre de prise de force pour l'entraînement des organes mobiles de la presse à partir du tracteur.

Afin de remédier à ces inconvénients, on a déjà proposé (demande de brevet d'Allemagne Fédérale 28 48 777) de réaliser une presse à balles cylindriques comportant une chambre avant dans laquelle la balle est formée et une chambre arrière dans laquelle le liage de la balle est effectué, de sorte que ce liage d'une balle peut avoir lieu simultanément à la formation d'une autre balle dans la chambre avant de la presse. Des moyens sont alors prévus pour transférer de la chambre avant à la chambre arrière chaque balle formée dans cette chambre avant quand elle a atteint le diamètre requis.

On évite ainsi les arrêts de la presse requis pour l'opération de liage et les pertes de temps de travail qui en résultent.

Toutefois, l'agencement proposé dans ce document antérieur pour réaliser ce transfert des balles d'une chambre à l'autre est extrêmement compliqué, et en conséquence à la fois coûteux et sujet à des dérangements, si l'on tient compte en particulier des conditions de travail rencontrées pour les machines de ce type.

Le but de l'invention est de remédier à cet inconvénient et de créer une presse à balles cylindriques ou rondes comportant deux chambres disposées l'une derrière l'autre dans le sens de marche de la presse, l'une de ces chambres servant à la formation de la balle, tandis que l'autre sert à effectuer le liage de la balle ainsi formée, et dans laquelle des moyens fiables et plus simples ont prévus pour le transfert des balles formées d'une chambre à l'autre.

Un autre but de l'invention est de créer une presse travaillant en continu de ce type, agencée de manière à assurer un déclenchement automatique de toutes les opérations requises pour la formation des balles, leur liage et leur déchargement.

L'invention est matérialisée à cet effet dans une presse à balles cylindriques ou rondes du type comprenant une chambre avant de formation d'une balle, à laquelle les produits de récolte sont amenés en nappe au moyen d'un ramasseur ou dispositif équivalent et dans laquelle ces produits subissent un enroulement sous l'effet de bandes ou courroies entraînées de façon positive et délimitant au moins en partie cette chambre avant, pour former une balle cylindrique ou ronde par enroulement de cette nappe sur elle-même, et une chambre de liage dans laquelle la balle est liée pour être ensuite déchargée sur le sol, cette chambre de liage étant également délimitée au moins en partie par des bandes ou courroies entraînées de façon positive et étant disposée derrière la chambre avant de formation d'une balle si l'on considère la direction de marche de la presse, et des moyens pour transférer de la chambre de formation avant à la chambre de liage arrière une balle déjà formée et ayant atteint le diamètre requis, en vue de son liage simultanément à la formation d'une nouvelle balle dans cette chambre de formation avant, caractérisée en ce que ces moyens de transfert sont disposés entre la chambre avant et la chambre arrière et comprennent des rouleaux ou organes équivalents s'étendant transversalement à la direction de marche, répartis autour d'un axe de rotation transversal commun, des moyens pour déplacer simultanément ces rouleaux par rotation autour de cet axe transversal pour le transfert d'une balle de la chambre avant à la chambre arrière, une surface inférieure s'étendant au-dessous de ces moyens de transfert entre ces deux chambres et sur laquelle la balle formée se déplace lors de son transfert, et l'espace entre deux rouleaux successifs assurant pendant le déplacement en rotation de ces rouleaux, en combinaison avec des bandes ou courroies passant sur eux, un déplacement positif de la balle formée dans cette chambre avant sur cette surface inférieure, pour son transfert à la chambre arrière.

Suivant un mode de réalisation paraissant avantageux, le dispositif de transfert peut être constitué par exemple par un ensemble en forme de tambour ou d'embarrage comprenant deux joues voisines des parois latérales de la presse et montées de façon à pouvoir tourner autour de l'axe commun orienté transversalement à la direction de marche de la presse, les rouleaux ou organes analogues reliant ces joues vers leur périphérie, et des bandes ou courroies passant autour de ces rouleaux ou analogues.

Suivant une réalisation paraissant judicieuse, il est prévu un seul jeu de bandes sans fin passant sur des rouleaux prévus pour la chambre avant de formation des balles, puis sur les rouleaux du dispositif de transfert, et ensuite sur des rouleaux conjugués à la chambre arrière de la presse et montés sur le système de porte de celle-ci.

Afin de compenser les variations de longueur utile des bandes ou courroies qui résultent de l'augmentation de diamètre des balles au cours de leur formation, certains des rouleaux soutenant ces bandes ou courroies sont constitués par des rouleaux de tension, d'une manière en soi connue dans les presses de ce type.

De même, l'un au moins des rouleaux conjugués à la chambre avant peut être supporté par des bras de mise en tension qui sont déplacés au fur et à mesure de l'augmentation de diamètre de la balle.

Suivant une autre particularité de l'invention, la partie inférieure des chambres de la presse est délimitée par un transporteur à bande ou à courroies unique, qui s'étend sensiblement sur toute la longueur de la presse et sur lequel les balles reposent à la fois pendant leur formation dans la chambre avant, pendant leur transfert d'une chambre à l'autre et pendant leur liage dans la chambre arrière de la presse.

Suivant une autre particularité encore, des moyens sont prévus pour commander le déplacement du dispositif de transfert quand la balle formée dans la chambre avant de la presse a atteint le diamètre requis, afin de transférer cette balle de cette chambre avant à la chambre arrière, pour son liage, puis son déchargement. La commande peut être assurée par le conducteur du tracteur, mais une solution judicieuse consiste à prévoir un palpeur ou détecteur qui est actionné de préférence par les bras de mise en tension des bandes ou courroies dans la chambre avant, se déplaçant lors de l'augmentation de diamètre des balles, ou par un organe combiné à ces bras, pour déclencher la rotation ou le pivotement du dispositif de transfert. ·

Ce dispositif de transfert peut, sans s'écarter de l'invention, être entraîné par des moyens hydrauliques, électriques ou mécaniques, selon le diamètre des balles devant être formées dans la presse. Une solution paraissant avantageuse consiste à prévoir, pour l'entraînement de ce dispositif de transfert, un moteur hydraulique dont le fonctionnement est déclenché par le palpeur ou détecteur précité lors de son actionnement.

Des moyens sont prévus judicieusement pour immobiliser, entre chaque cycle de transfert, le dispositif de transfert dans une position déterminée, par exemple de séparation des deux chambres. D'autres moyens sont de préférence également prévus pour déclencher automatiquement l'opération de liage quand une balle a été transférée de la chambre avant à la chambre arrière, et pour décharger la balle sur le sol, par ouverture de la porte arrière de la presse par exemple, quand l'opération de liage est terminée.

On comprend à la lecture de ce qui précède que l'invention consiste ainsi à prévoir, sur une même presse, deux chambres disposées l'une derrière l'autre sur la longueur de la presse et ayant des fonctions différenciées, ce qui permet d'assurer la formation d'une balle à partir des produits de récolte ramassés sur le champ par le ramasseur pendant le liage, puis le déchargement d'une balle formée au préalable, de sorte que la presse peut travailler et se déplacer en continu, les interventions du conducteur du tracteur auquel la presse est attelée étant, si les moyens précités sont prévus pour assurer une commande automatique des différentes fonctions de la presse, limitées à la conduite de son véhicule.

La description qui va suivre, faite en regard des dessins annexés, donnés à titre non limitatif, permettra de mieux comprendre l'invention.

La Fig. 1 est une vue en perspective d'une presse à balles cylindriques travaillant en continu suivant l'invention.

Les Fig. 2 à 15 sont des représentations schématiques de profil montrant différentes conditions de travail de la presse.

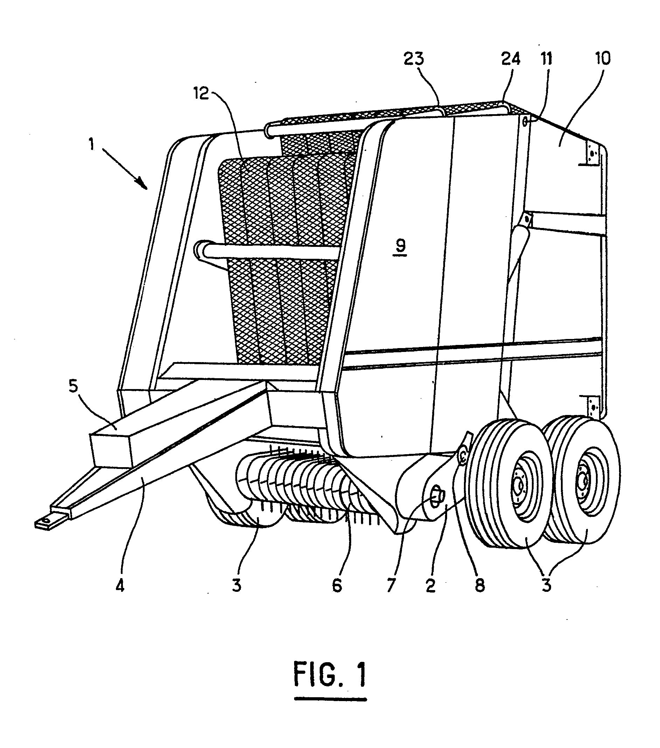

La presse représentée sur la Fig. 1 comprend un corps 1 équipé d'un châssis 2 supporté à partir du sol par deux paires de roues 3, et elle est destinée à être attelée à un tracteur ou à un autre véhicule au moyen d'un timon ou d'une flèche d'attelage indiqué en 4. Cette flèche est surmontée d'un carter 5 pour la réception d'un arbre de prise de force (non représenté) utilisé d'une façon en soi classique pour l'entraînement des organes mobiles de la presse à partir du tracteur auquel elle est attelée. On a montré en 6 le ramasseur de la presse, qui est entraîné par un arbre dont une extrémité est visible en 7 et qui est monté de façon relevable sur le châssis 2 de la presse autour d'un axe 8.

Le corps 1 de la presse comprend deux parois latérales 9 à l'extrémité supérieure arrière desquelles un système de porte désigné d'une façon générale par la référence 10 est articulé en 11. On a indiqué en 12 les bandes ou courroies qui assurent la formation des balles par enroulement d'une nappe de produits de récolte ramassés par le ramasseur 6, de la manière qui apparaîtra plus loin.

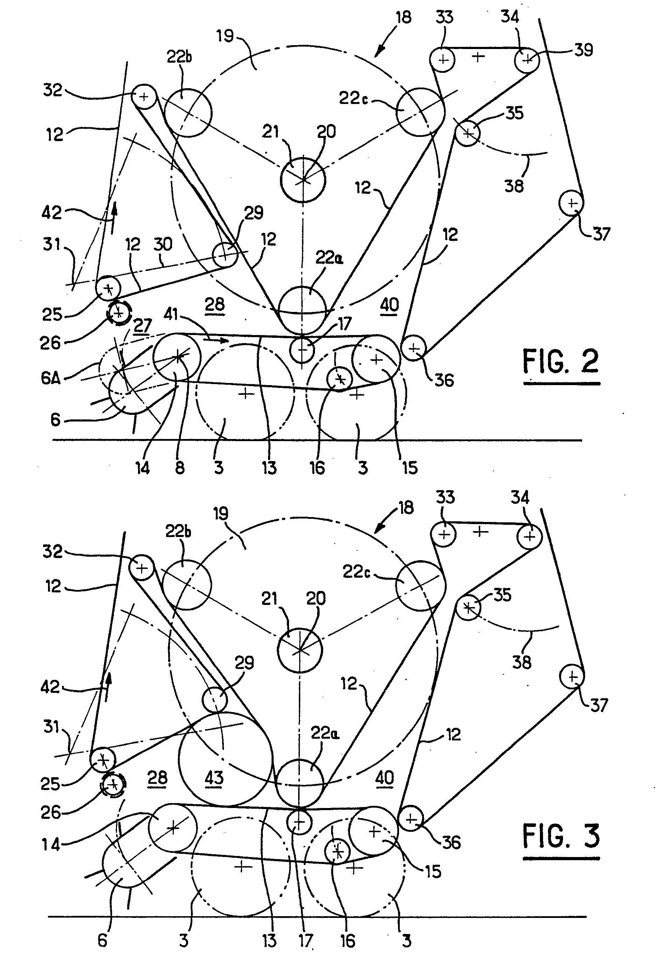

On décrira maintenant les éléments de la presse suivant l'invention qui sont nécessaires à la compréhension de cette dernière et qui ont été représentés de façon schématique sur les Fig. 2 à 15, sur lesquelles les mêmes chiffres de référence ont été utilisés pour désigner les mêmes organes.

On retrouve sur ces Fig. 2 à 15 les paires de roues 3 de la presse et le ramasseur 6, qui est monté de façon relevable autour d'un axe 8.

Il est prévu sur le châssis de la presse un transporteur inférieur à bande 13 qui peut être constitué par une bande de grande largeur ou par plusieurs bandes ou corroies juxtaposées. Cette bande passe autour de deux rouleaux 14, 15 situés au même niveau, de sorte que le brin supérieur du transporteur 13 est horizontal. Le rouleau avant 14 est ici coaxial à l'axe de pivotement 8 du ramasseur, et les produits ramassés par celui-ci parviennent directement sur le transporteur 13.

On voit sur les dessins que le transporteur 13 s'étend ainsi depuis l'extrémité avant du châssis de la presse jusqu'à l'extrémité arrière de ce chassis. La tension de la bande est assurée par un rouleau de tension réglable 16, et il est prévu juste au-dessous du brin supérieur du transporteur 13 un rouleau d'appui 17 dont le rôle sera indiqué plus loin.

Un dispositif de transfert désigné dans son ensemble par 18, ayant ici une forme de tambour ou d'embarrage, est disposé dans la partie médiane de la presse. Suivant le mode de réalisation considéré, ce dispositif de transfert comprend deux joues latérales de forme circulaire 19 montées à rotation dans les parois latérales 9 de la presse de façon à pouvoir tourner autour d'un axe indiqué schématiquement en 20 sur les Fig. 2 à 15, l'entraînement en rotation étant assuré par un moteur hydraulique montré schématiquement en 21. Trois rouleaux 22a, 22b, 22c sont montés à la périphérie des joues 19. Dans la condition de repos ou d'arrêt du dispositif de transfert, l'un des rouleaux 22 se trouve en position basse, comme montré sur la Fig. 2, et il est alors placé en regard du rouleau d'appui 17.

On décrira maintenant le trajet des bandes ou courroies 12 à l'intérieur de la presse. On n'a représenté sur les Fig. 2 à 15 que la partie de ces bandes ou courroies sans fin qui se trouve dans la zone de la presse correspondant à l'invention, étant entendu que lesdites bandes ou courroies 12 sont soutenues dans la partie supérieure de la presse (non représentée sur les Fig. 2 à 15) par des rouleaux de tension qui sont visibles en 23 et 24 sur la Fig. 1 et qui assurent d'une façon en soi classique la compensation de longueur des parties actives des bandes ou courroies qui est rendue nécessaire par l'augmentation de diamètre des balles au cours de leur formation.

On partira, pour cette description du trajet des bandes ou courroies 12, de la partie avant de la presse. On voit que ces bandes ou courroies 12 passent, à l'extrémité inférieure avant de la presse, sur un rouleau de renvoi 25 au-dessous duquel est disposé un rouleau de guidage ou d'amenée 26 qui ménage avec le ramasseur 6 un intervalle d'entrée 27 dirigeant les produits de récolte vers la chambre avant de la presse, qui est indiquée en 28 sur la Fig. 2. Les bandes ou courroies 12 se dirigent, après avoir quitté le rouleau de renvoi 25, vers un rouleau de tension 29, la partie de ces bandes ou courroies 12 qui s'étend entre les rouleaux 25 et 29 participant à la formation des balles dans la chambre avant 28 de la presse comme décrit plus loin. Le rouleau 29 est monté sur des bras de tension 30 qui pivotent en 31 sur le corps de la presse et qui sont soumis à l'action de ressorts (non représentés) d'une manière en soi usuelle dans cette technique.

Les bandes ou courroies 12 passent ensuite autour d'un rouleau de renvoi supérieur fixe 32, puis elles s'étendent dans une relation de contact sensiblement tangentielle, dans la position de repos visible sur la Fig. 2, par rapport au rouleau 22b du dispositif de transfert 18 qui se trouve, dans cette condition, à l'avant de ce dispositif.

Les bandes ou courroies 12 passent ensuite autour du rouleau 22a du dispositif de transfert 18 qui se trouve en regard du rouleau d'appui 17, pour rejoindre le troisième rouleau 22c du dispositif de transfert et pour passer ensuite autour d'un rouleau de renvoi supérieur fixe arrière 33. Après avoir quitté ce rouleau 33, les bandes ou courroies 12 passent autour des quatre rouleaux de renvoi 34, 35, 36, 37 avant de rejoindre les rouleaux de tension supérieurs indiqués en 24 et 23 sur la Fig. 1. Les rouleaux 34, 35, 36, 37 sont montés sur le système de porte arrière 10 de la presse. Les rouleaux 34, 36 et 37 sont fixes sur ce système de porte, tandis que le rouleau 35 est un rouleau de tension pouvant se déplacer par rapport aux précédents selon un arc de cercle 38 ayant pour centre l'axe 39 du rouleau 34.

Ainsi, la chambre avant 28 de la presse, qui sert à la formation des balles, est ménagée, dans la condition de repos ou d'arrêt du dispositif de transfert 18, entre la partie avant du brin supérieur du transporteur 13, la partie des bandes ou courroies 12 qui s'étend entre les rouleaux 25 et 29, et la partie de ces bandes ou courroies qui s'étend entre les rouleaux 22 du dispositif de transfert qui se trouvent à l'avant et en position basse, formés sur la Fig. 2 par les rouleaux 22b et 22a. La chambre arrière 40 de la presse, qui sert au liage des balles formées comme décrit plus loin, est ménagée alors entre la partie arrière du brin supérieur du transporteur 13, la partie des bandes ou courroies qui s'étend entre les rouleaux 22 du dispositif de transfert qui se trouvent en position basse et à l'arrière, formés sur la Fig. 2 par les rouleaux 22a et 22c, et la partie de ces bandes ou courroies qui s'étend entre les rouleaux 35 et 36 portés par la porte arrière de la presse. On constate également sur la Fig. 2 que, dans cette condition de repos ou d'arrêt, le dispositif de transfert 18 sépare les deux chambres 28, 40 l'une de l'autre.

Tous les organes actifs de la presse, à savoir le ramasseur 6, le transporteur 13, les bandes ou courroies 12, etc.... sont entraînés à partir de l'arbre de prise de force du véhicule tracteur, d'une manière en soi classique, par des mécanismes dont l'agencement apparaîtra aisément aux techniciens spécialisés dans ce domaine.

On décrira maintenant en regard des Fig. 2 à 15 le mode de fonctionnement et d'utilisation de la presse suivant l'invention, en indiquant les organes et dispositifs de commande qui interviennent dans ce fonctionnement et qui n'ont pas été décrits ci-dessus.

On a représenté sur la Fig. 2 la condition de repos de la presse, le ramasseur 6 pouvant alors occuper la position relevée ou position route indiquée en traits mixtes en 6A.

Quand la presse, attelée à un véhicule tracteur tel qu'un tracteur agricole (non représenté), est mise en service, le ramasseur 6 est abaissé et ce ramasseur et les autres organes de la presse sont entraînés à partir de l'arbre de prise de force relié à ce véhicule tracteur. Le transporteur inférieur 13 est alors entraîné dans un sens tel que son brin supérieur se déplace vers l'arrière comme indiqué en 41, et les bandes ou courroies 12 tournent de façon telle qu'elles se déplacent dans le sens indiqué par la flèche 42.

Dans cette condition, lorsque la presse progresse à travers le champ, les produits de récolte reposant en andain sur le sol sont ramassés par le remasseur 6 et sont dirigés par celui-ci et par le rouleau 26 jusque dans la chambre avant 28 de la presse, en formant une nappe qui, sous l'effet du transporteur 13 et des bandes ou courroies 12, est enroulée sur elle-même pour former une balle cylindrique ou ronde, le stade correspondant au début de la formation de cette balle ayant été illustré sur la Fig. 3, sur laquelle la balle en cours de formation est désignée par la référence 42. On voit que cette balle est alors retenue entre le brin supérieur du transporteur 13, la partie des bandes ou courroies 12 qui s'étend entre les rouleaux 22b et 22a du dispositif de transfert 18, et la partie des bandes ou courroies qui s'étend entre les rouleaux 25 et 29, ce dernier rouleau étant, sur la Fig. 3, parvenu déjà dans une certaine position d'effacement pour tenir compte de l'augmentation de volume de la chambre avant 28 de la presse qui est nécessaire en vue de la formation de la balle.

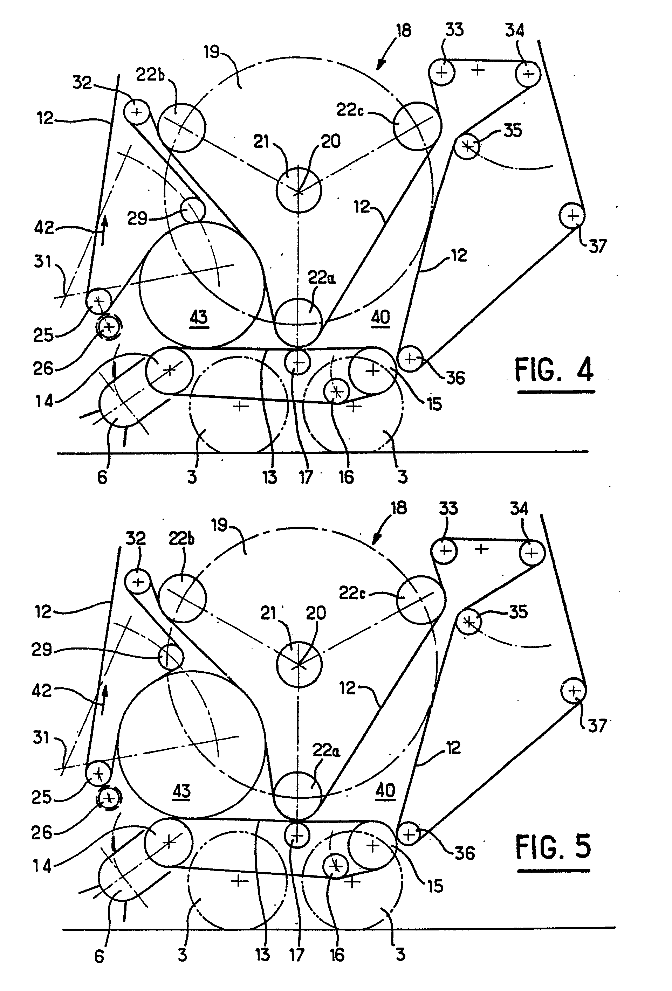

La balle 43 ainsi formée dans la chambre avant 28 de la presse augmente de diamètre de la manière usuelle, comme visible sur les Fig. 4 et 5, cette augmentation de diamètre étant rendue possible par le pivotement vers le haut des bras 30 portant le rouleau 29 autour de l'axe 31, en surmontant la force du ou des ressorts de rappel prévus, la compensation de longueur des bandes ou courroies étant complétée par les rouleaux de tension supérieurs 23, 24, non représentés sur les Fig. 2 à 15. Pendant cette augmentation de diamètre, la balle demure sur le brin supérieur du transporteur 13 et entre les parties des bandes ou courroies mentionnées ci-avant, le dispositif de transfert 18 étant immobile.

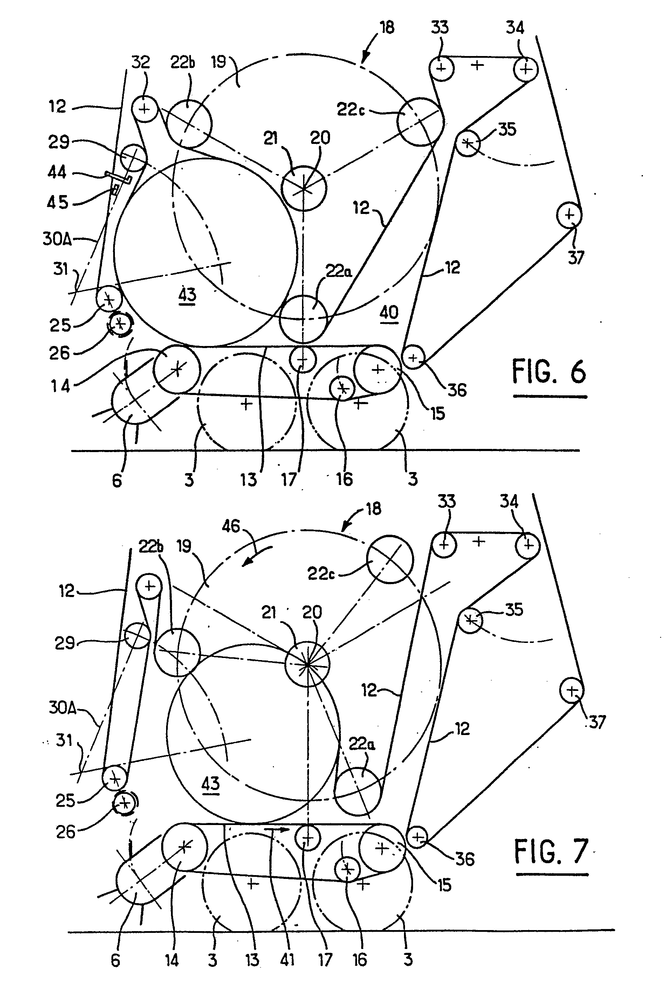

On a représenté sur la Fig. 6 la condition obtenue lorsque la balle 43 a atteint son diamètre maximum. On voit que le rouleau 29 est alors parvenu dans sa position d'effacement limite et que la balle 43 occupe sensiblement la totalité de l'espace qui sépare les rouleaux 22b, 22a du dispositif de transfert 18. Dans leur position limite indiquée en traits mixtes en 30A, les bras 30 portant le rouleau 29 et pivotant autour de l'axe 31 viennent actionner un dispositif de verrouillage effaçable indiqué schématiquement en 44, qui les maintient dans cette position.

En fin de course, les bras 30 actionnent également un palpeur ou organe équivalent montré schématiquement en 45, qui déclenche le fonctionnement du moteur hydraulique 21 d'entraînement en rotation du dispositif de transfert 18.

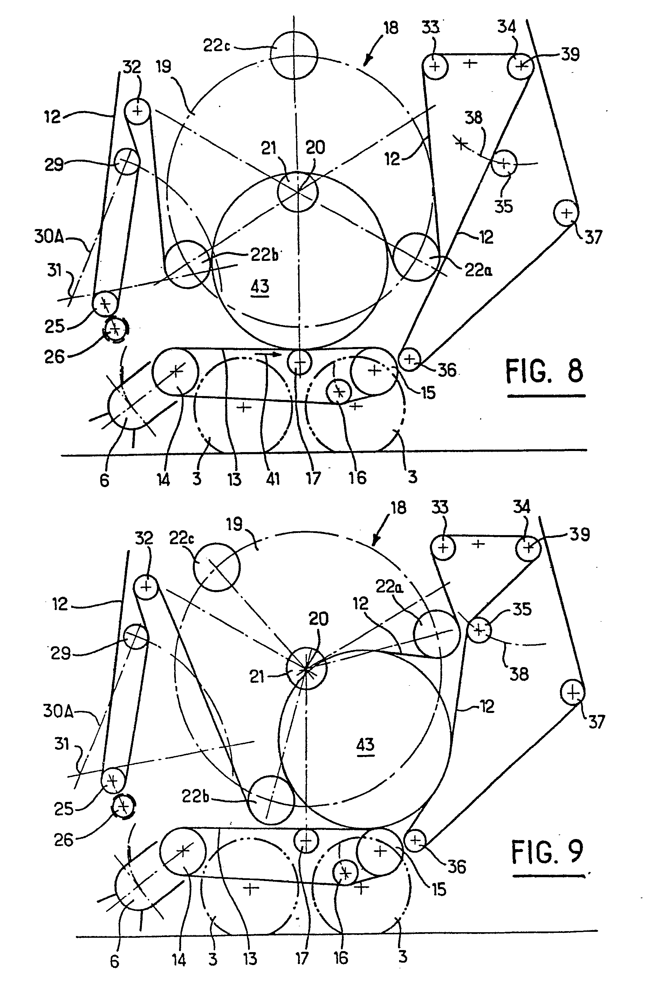

Après ce déclenchement, le dispositif de transfert commence à tourner dans le sens anti-horaire comme indiqué par la flèche 46 sur la Fig. 7. Ceci déplace la balle 43 ayant le diamètre requis sur le brin supérieur du transporteur 13, qui est soutenu par le rouleau d'appui 17, en direction de l'arrière. On a montré ce déplacement de la balle 43 en vue de son transfert de la chambre avant 28 à la chambre arrière 40 de la presse sur les Fig. 7 à 10. Sur la Fig. 7, le rouleau inférieur 22a du dispositif de transfert 18 vient juste de quitter la position basse qu'il occupait pendant la formation de la balle dans la chambre avant 28 de la presse. Sur la Fig. 9, les rouleaux 22a et 22b du dispositif de transfert occupent une position symétrique par rapport à un plan vertical passant par l'axe de rotation 20 de ce dispositif de transfert et la balle 43 se trouve juste au-dessus du rouleau d'appui 17. Sur la Fig. 9, la balle 43 pénètre dans la chambre arrière de la presse et le rouleau 22b a presque atteint la position basse. On voit qu'au cours de ce mouvement la balle 43, qui est supportée par le brin supérieur du transporteur 13, est retenue par la partie de bandes ou courroies qui s'étend entre les rouleaux 22a et 22b, de sorte que la rotation indiquée du dispositif de transfert 18 provoque un déplacement positif de cette balle 43 vers la chambre arrière 40 de la presse.

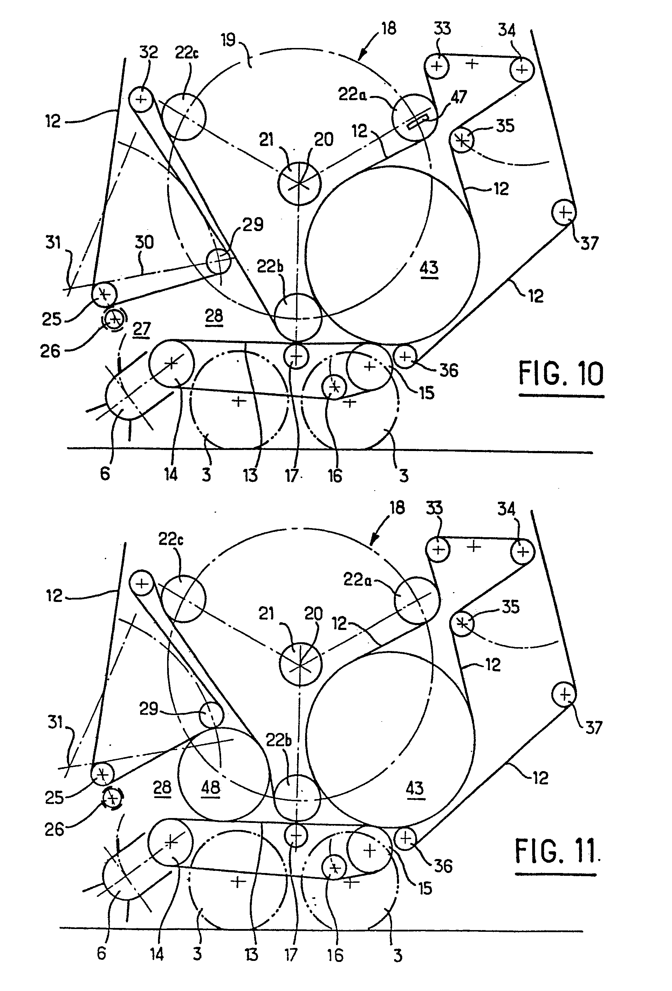

Après un déplacement angulaire de 120°, le dispositif de transfert 18 s'arrête automatiquement dans la position représentée sur la Fig. 10, le rouleau 22b occupant alors la position précédemment occupée par le rouleau 22a. Ce déplacement angulaire d'un pas sur 120° peut être obtenu par exemple au moyen d'une butée de fin de course prévue sur la presse.

Lorsque la balle 43 parvient dans la chambre arrière de la presse, c'est-à-dire lorsqu'elle vient occuper la position illustrée sur la Fig. 10, un organe de détection indiqué schématiquement en 47 sur cette Fig. 10 est actionné pour déclencher l'opération de liage de cette balle.

Par ailleurs, le dispositif de transfert actionne à la fin de son déplacement angulaire sur 120° un détecteur libérant les bras 30 portant le rouleau 29, qui sont ainsi rappelés élastiquement en position basse visible sur la Fig. 10.

L'arrêt du dispositif de transfert après une rotation de 120°, le déclenchement de l'opération de liage et le déverrouillage des bras 30 peuvent être assurés d'ailleurs à partir d'un même détecteur combiné au dispositif de transfert, tel que celui indiqué en 47 sur la Fig. 10.

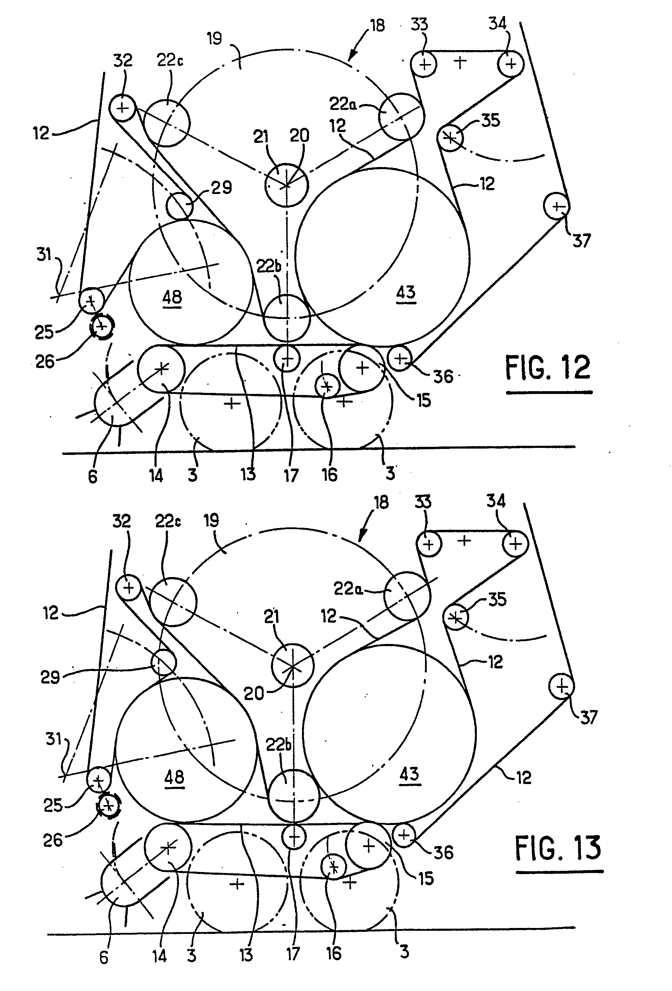

Pendant la dernière partie de ce déplacement angulaire du dispositif de transfert 18, les produits de récolte ramassés par le ramasseur 6 se sont accumulés dans la chambre avant 28 de la presse. Lorsque les bras 30 sont libérés, le rouleau 29 parvient comme indiqué précédemment en position basse, de sorte que ces produits de récolte subissent à nouveau un enroulement entre le brin supérieur du transporteur 13 et les parties des bandes ou courroies 12 qui se trouvent respectivement entre les rouleaux 25 et 29, d'une part, et les rouleaux 22c et 22b, d'autre part. Il se forme ainsi dans la chambre avant 28 de la presse, pendant le liage de la balle 43 maintenant transférée à la chambre arrière 40, une nouvelle balle comme indiqué en 48 sur la Fig. 11. Le diamètre de cette balle 48 augmente de la même manière que cela a été le cas pour la balle 43 et le rouleau 29 porté par les bras 30 se déplace à nouveau vers le haut comme montré sur les Fig. 12 et 13.

Le dispositif de liage prévu sur la presse peut être de type quelconque, en soi classique, et en conséquence il n'a pas été représenté.

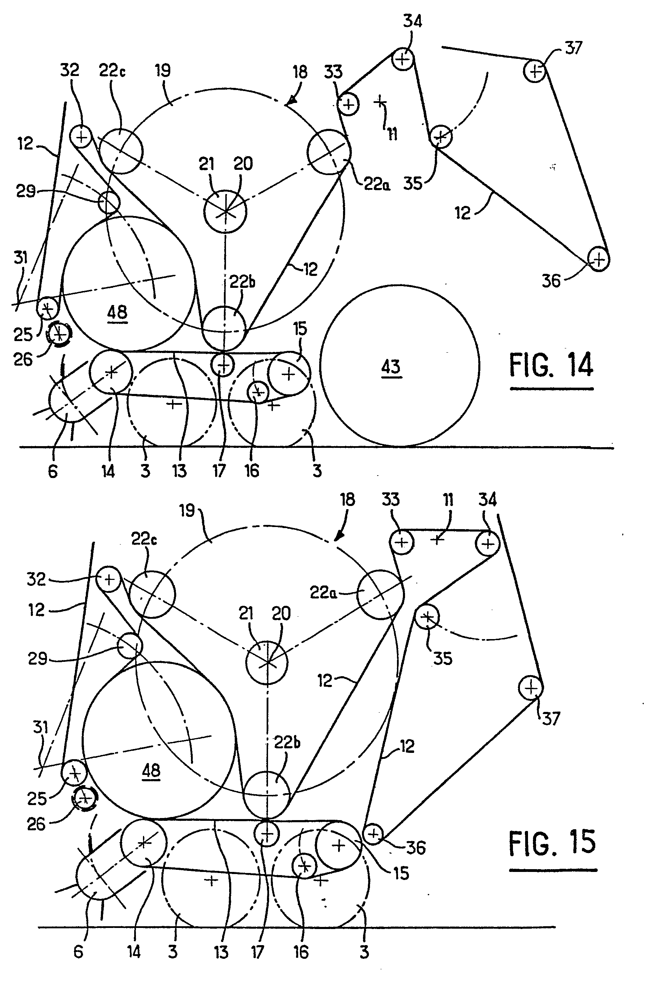

Lorsque l'opération de liage de la balle 43 qui se trouve dans la chambre arrière de la presse est terminée, le système de porte arrière 10 de cette presse est ouvert de façon automatique par une commande également classique et la balle 43 est alors déchargée sur le sol à l'arrière de la presse comme visible sur la Fig. 14. Ce système de porte se referme dès que la presse a avancé sur une distance suffisante pour assurer le dégagement de la balle 43 et la condition obtenue est alors celle visible sur la Fig. 15, qui correspond sensiblement à celle représentée sur la Fig. 4 ou 5, la nouvelle balle 48 formée dans la chambre avant 28 de la presse augmentant de diamètre et ayant, sur cette Fig. 15, presque atteint son diamètre maximum. Quand ce diamètre maximum est atteint, le cycle décrit ci-avant se répète, c'est-à-dire que les bras 30 parvenant dans leur position limite sont verrouillés et déclenchement une nouvelle rotation sur 120° du dispositif de transfert 18, pour provoquer le transfert de cette nouvelle balle 48 dans la chambre arrière 40 de la presse.

On voit en conséquence que l'invention permet à la presse de se déplacer en continu à travers un champ et d'assurer également de façon continue la formation successive de balles, qui sont roulées dans la chambre avant de la presse, puis transférées dans la chambre arrière de celle-ci, où elles subissent un liage pendant le début de l'enroulement d'une nouvelle balle, les balles liées étant ensuite déchargées à l'arrière de la presse. Toutes ces opérations peuvent, par l'intervention de palpeurs ou détecteurs associés à des dispositifs de déclenchement simples, s'effectuer de façon entièrement de déclenchement automatiquement, de sorte que le conducteur du véhicule tracteur est déchargé de toute intervention autre que la conduite du véhicule.

Des modifications peuvent être apportées au mode de réalisation décrit, dans le domaine des équivalences techniques, sans s'écarter de l'invention.

**Revendications**

1. Presse à balles cylindriques ou rondes du type comprenant une chambre avant (28) de formation d'une balle (43, 48), à laquelle les produits de récolte sont amenés en nappe au moyen d'un remasseur (6) ou dispositif équivalent et dans laquelle ces produits subissent un enroulement sous l'effet de bandes ou courroies (12) entraînées de façon positive et délimitant au moins en partie cette chambre avant, pour former une balle cylindrique ou ronde par enroulement de cette nappe sur elle-même, et une chambre de liage (40) dans laquelle la balle est liée pour être ensuite déchargée sur le sol, cette chambre de liage étant également délimitée au moins en partie par des bandes ou courroies (12) entraînées de façon positive et étant disposée derrière la chambre avant de formation d'une balle si l'on considère la direction de marche de la presse, et des moyens (18) pour transférer de la chambre de formation avant à la chambre de liage arrière une balle déjà formée et ayant atteint le diamètre requis, en vue de son liage simultanément à la formation d'une nouvelle balle dans cette chambre de formation avant, caractérisée en ce que ces moyens de transfert (18) sont disposés entre la chambre avant (28) et la chambre arrière (40) et comprennent des rouleaux (22a, 22b, 22c) ou organes équivalents s'étendant transversalement à la direction de marche, répartis autour d'un axe de rotation transversal commun (20), des moyens (21) pour déplacer simultanément ces rouleaux par rotation autour de cet axe transversal (20) pour le transfert d'une balle (43, 48) de la chambre avant (28) à la chambre arrière (40), une surface inférieure (13) s'étendant au-dessous de ces moyens de transfert entre ces deux chambres et sur laquelle la balle formée se déplace lors de son transfert, et l'espace entre deux rouleaux (22a, 22b, 22c) successifs assurant pendant le déplacement en rotation de ces rouleaux, en combinaison avec des bandes ou courroies passant sur eux, un déplacement positif de la balle formée dans cette chambre avant sur cette surface inférieure, pour son transfert à la chambre arrière.

2. Presse à balles cylindriques suivant la revendication 1, caractérisée en ce que, en position de repos ou d'arrêt, le dispositif de transfert (18) sépare les deux chambres (28, 40) de la presse l'une de l'autre.

3. Presse à balles cylindriques suivant la revendication 1 ou 2, caractérisée en ce que le dispositif de transfert (18) est constitué par un ensemble en forme de tambour ou d'embarrage comprenant deux joues (19) voisines des parois latérales (9) de la presse et montées de façon à pouvoir tourner autour de l'axe commun (20) orienté transversalement à la direction de marche de la presse, les rouleaux ou organes analogues (22a, 22b, 22c) reliant ces joues vers leur périphérie, et des bandes ou courroies (12) passant autour de ces rouleaux ou analogues.

4. Presse à balles cylindriques suivant l'une quelconque des revendications 1 à 3, caractérisée en ce qu'il est prévu un seul jeu de bandes ou courroies sans fin (12) passant sur des rouleaux de renvoi avant (25, 29, 32) de la presse, puis sur les rouleaux (22a, 22b, 22c) ou organes analogues du dispositif de transfert (18) et sur des rouleaux arrière (33—37) de la presse.

5. Presse à balles cylindriques suivant l'une quelconque des revendications précédentes, caractérisée en ce que la surface inférieure (13) est constituée par un transporteur inférieur s'étendant sur la longueur de la presse entre les chambres avant (28) et arrière (40), les balles (43, 48) reposant sur ce transporteur lors de leur formation dans la chambre avant (28) de la presse, lors de leur transfert de cette chambre avant à la chambre arrière (40) et lors de leur liage dans cette chambre arrière.

6. Presse à balles cylindriques suivant la revendication 5, caractérisée en ce que ce transporteur inférieur (13) comprend un brin supérieur sensiblement horizontal et en ce qu'il s'étend depuis un point (14) situé juste en arrière du ramasseur (6) de la presse jusqu'à l'arrière de celle-ci.

7. Presse à balles cylindriques suivant la revendication 5 ou 6, caractérisée en ce que la chambre avant (28) de la presse est délimitée par le brin supérieur du transporteur inférieur (13), par les bandes ou courroies des moyens de transfert dans leur partie s'étendant entre deux rouleaux (22a, 22b) ou organes analogues du dispositif de transfert, et par des bandes ou courroies (12) passant sur des rouleaux de renvoi (25, 29) dont l'un au moins est déplaçable pour tenir compte de l'augmentation de diamètre de la balle au cours de sa formation.

8. Presse à balles cylindriques suivant l'une quelconque des revendications 5 à 7, caractérisée en ce que la chambre arrière (40) de la presse est délimitée par la partie arrière du brin supérieur du transporteur inférieur (13), par les bandes ou courroies des moyens de transfert dans leur partie s'étendant entre des rouleaux (22a, 22c) ou organes analogues du dispositif de transfert et par des bandes ou courroies (12) passant sur des rouleaux de renvoi (35, 36) prévus sur le système de porte arrière (10) de la presse.

9. Presse à balles cylindriques suivant l'une quelconque des revendications 4 à 8, caractérisée en ce qu'il est prévu, pour la chambre avant, un rouleau déplaçable (29) porté par des bras (30) montés de façon pivotante, au moins un organe détecteur (45) placé dans la trajectoire de ces bras (29) en fin de course de ceux-ci, et des organes reliant cet organe détecteur au mécanisme (21) d'entraînement en rotation du dispositif de transfert (18), pour assurer le déplacement angulaire d'un pas de ce dispositif, en vue du transfert d'une balle formée dans la chambre avant (28) de la presse jusque dans la chambre arrière (40) de celle-ci, pour son liage et son éjection.

10. Presse à balles cylindriques suivant la revendication 9, caractérisée en ce que des moyens (47) sont prévus pour détecteur le transfert d'une balle dans la chambre arrière (40) de la presse, afin de déclencher l'opération de liage de cette balle.

**Patentansprüche**

1. Presse für zylindrische oder runde Ballen des Typs, der eine vordere Kammer (28) zur Bildung eines Ballens (43, 48) aufweist, der die Ernteprodukte flächig mit Hilfe eines Aufnehmers (6) oder einer äquivalenten Vorrichtung zugefhrt und in der diese Produkte einer Aufrollung unter der Wirkung von Bändern oder Riemen (12) unterworfen werden, die positiv angetrieben sind und wenigstens einen Bereich dieser vorderen Kammer begrenzen, um einen zylindrischen oder runden Ballen durch Aufrollung der Schicht auf sich selbst zu bilden, und einer Bindekammer (40), in der der Ballen gebunden wird, um anschliessend auf dem Boden entladen zu werden, wobei diese Bindekammer ebenfalls wenigstens teilweise durch Bänder oder Riemen (12) begrenzt ist, die positiv angetrieben werden, und die hinter der vorderen Kammer zur Bildung eines Ballens angeordnet ist, wenn man die Fahrtrichtung der Presse in Betracht zieht, und Mittel (18), um einen schon geformten Ballen, der schon den erforderlichen Durchmesser erhalten hat, von der vorderen Bildungskammer zur rückwärtigen Bindekammer zu überführen, im Hinblick auf sein Binden gleichzeitig mit der Bildung eines neuen Ballens in dieser vorderen Bildungskammer, dadurch gekennzeichnet, dass die Mittel zur Überführung (18) zwischen der vorderen Kammer (28) und der rückwärtigen Kammer (40) angeordnet sind und Rollen (22a, 22b, 22c) oder äquivalente Organe umfassen, die sich quer zur Fahrtrichtung erstrecken und um eine gemeinsame, quer verlaufende Drehachse (20) umlaufen dass Mittel (21) vorgesehen sind, um die Rollen gleichzeitig durch Drehung um diese Querachse (20) für das Überhagen eines Ballens (43, 48) von der vorderen Kammer (28) in die rückwärtige Kammer (40) zu verstellen, sowie eine untere Fläche (13), die sich unterhalb dieser Überführungsmittel zwischen den zwei Kammern erstreckt und auf der der gebildete Ballen sich bei seiner Überführung verlagert, und dass der Raum zwischen zwei aufeinanderfolgenden Rollen (22a, 22b, 22c) ausreicht, um bei der drehenden Verlagerung dieser Rollen in Kombination mit auf diesen laufenden Bändern oder Riemen eine positive Verlagerung des Ballens, der in dieser vorderen Kammer gebildet ist, auf dieser unteren Fläche für seine Überführung in die rückwärtige Kammer sicherzustellen.

2. Presse für zylindrische Ballen nach Anspruch 1, dadurch gekennzeichnet, dass in der Ruheoder Haltstellung die Überführungsvorrichtung (18) die beiden Kammern (28, 40) der Presse voneinander trennt.

3. Presse für zylindrische Ballen nach Anspruch 1 oder 2, dadurch gekennzeichnet, dass die Überführungsvorrichtung (18) durch eine Anordnung in Form einer Trommel oder eines Käfigs gebildet ist, welche zwei Stirnscheiben (19) aufweist, welche den seitlichen Wänden (9) der Presse benachbart sind und die derart montiert sind, dass sie um die gemeinsame Achse (20) drehen können, die quer zur Fahrtrichtung der Presse orientiert ist, wobei die Rollen oder analogen Organe (22a, 22b, 22c) mit diesen Stirnscheiben im Bereich deren Umfang verbunden sind, und dass die Bänder oder Riemen (12) um die Rollen oder analogen Elemente laufen.

4. Presse für zylindrische Ballen nach irgendeinem der Ansprüche 1 bis 3, dadurch gekennzeichnet, dass ein einziger Satz von endlosen Bänder oder Riemen (12) vorgesehen ist, die über vordere Vorgelegeräder (25, 29, 32) der Presse, von da über die Rollen (22a, 22b, 22c) oder analoge Organe der Überführungsvorrichtung (18) und über rückwärtige Rollen (33 bis 37) der Presse laufen.

5. Presse für zylindrische Ballen nach irgendeinem der voranstehenden Ansprüche, dadurch gekennzeichnet, dass die untere Fläche (13) durch einen unteren Förderer gebildet ist, der sich über die Länge der Presse zwischen der vorderen Kammer (28) und der rückwärtigen Kammer (40) erstreckt, wobei die Ballen (43, 48) auf diesem Förderer bei ihrer Bildung in der vorderen Kammer (28) der Presse, bei ihrer Überführung von dieser vorderen Kammer zur rückwärtigen Kammer (40) und während ihrer Bindung in der rückwärtigen Kammer verweilen.

6. Presse für zylindrische Ballen nach Anspruch 5, dadurch gekennzeichnet, dass der untere Förderer (13) ein oberes Trum aufweist, das ziemlich genau horizontal verläuft, und dass es sich von einem Punkt (14) der unmittelbar hinter dem Aufsammler (6) der Presse liegt, bis zu deren rückwärtigen Teil erstreckt.

7. Presse für zylindrische Ballen nach Anspruch 5 oder 6, dadurch gekennzeichnet, dass die vordere Kammer (28) der Presse durch das obere Trum des unteren Förderers (13), durch die Bänder oder Riemen der Überführungsmittel in ihrem Bereich, der sich zwischen zwei Rollen (22a, 22b) oder analogen Organen der Überführungseinrichtung erstreckt, und durch die Bänder oder Riemen (12) begrenzt ist, die über die Vorgelegerollen (25, 29) laufen, von denen wenigstens eine verstellbar ist, um der Vergrösserung des Durchmessers des Ballens im Laufe seiner Bildung Rechnung zu tragen.

8. Presse für zylindrische Ballen nach irgendeinem der Ansprüche 5 bis 7, dadurch gekennzeichnet, dass die rückwärtige Kammer (40) der Presse durch den rückwärtigen Abschnitt des oberen Trums des unteren Förderers (13), durch die Bänder oder Riemen der Überführungsmittel in ihrem Bereich, der sich zwischen den Rollen (22a, 22c) oder analogen Organen der Überführungsvorrichtung erstreckt, und durch die Bänder oder Riemen (12) begrenzt ist, die über die Vorgelegerollen (35, 36) laufen, die in dem rückwärtigen Öffnungs-system (10) der Presse vorgesehen sind.

9. Presse für zylindrisch Ballen nach irgendeinem der Ansprüche 4 bis 8, dadurch gekennzeichnet, dass für die vordere Kammer eine verstellbare Rolle (29) vorgesehen ist, die durch Arme (30) getragen ist, welche schwenkbar montiert sind, wenigstens ein Fühlorgan (45), das in der Bahn des Armes (29) am Ende von dessen Bahn angeordnet ist, und dass Organe vorgesehen sind, welche das Fühlorgan mit einem Mechanismus (21) für den Drehantrieb der Überführungseinrichtung (18) verbinden, um die Winkelverstellung der Vorrichtung um einen Schritt im Hinblick auf die Überführung eines in der vorderen Kammer (28) der Presse gebildeten Ballens bis gerade in deren rückwärtige Kammer (40) für sein Binden und Auswerfen sicherzustellen.

10. Presse für zylindrische Ballen nach Anspruch 9, dadurch gekennzeichnet, dass Mittel (47) vorgesehen sind, um die Überführung eines Ballens in die rückwärtige Kammer (40) der Presse festzustellen, um den Vorgang der Bindung dieses Ballens auszulösen.

**Claims**

1. A cylindrical or round bale press of the type comprising a front chamber (28) for forming a bale (43, 48), to which the crop products are fed in the form of a layer by means of a pick-up device (6) or equivalent device and in which such crop products are subjected to a winding action under the effect of positively driven belts or bands (12) which at least partly define said front chamber to form a cylindrical or round bale by winding said layer about itself, and a binding chamber (40) in which the bale is bound to be subsequently discharged on to the ground, the binding chamber also being at least partially defined by positively driven belts or bands (12) and being disposed rearwardly of the front bale forming chamber when considering the direction of movement of the press, and means (18) for transfering from the front bale forming chamber to the rearward binding chamber a bale which has already been formed and which has reached the required diameter, for binding thereof simultaneously with the formation of a fresh bale in the front bale forming chamber, characterised in that said transfer means (18) are disposed between the front chamber (28) and the rear chamber (40) and comprise rollers (22a, 22b, 22c) or equivalent members which extend transversely with respect to the direction of movement of the press, being distributed around a common transverse axis of rotation (20), means (21) for simultaneously displacing said rollers by rotation about said transverse axis (20) for transferring a bale (43, 48) from the front chamber (28) to the rear chamber (40), a lower surface (13) which extends beneath said means for transfering bales between said two chambers and over which the formed bale is displaced upon transfer thereof, and the space between two successive rollers (22a, 22b, 22c), during the rotary displacement of said rollers, in combination with belts or bands passing therearound, providing for positive displacement of the bale formed in said front chamber over said lower surface for the transfer thereof to the rear chamber.

2. A cylindrical bale press according to claim 1 characterised in that, in the rest or stopped position, the transfer device (18) separates the two chambers (28, 40) of the press from each other.

3. A cylindrical bale press according to claim 1 or claim 2 characterised in that the transfer device (18) comprises an assembly in the form of a drum or bar assembly comprising two side members (19) which are adjacent to the side walls (9) of the press and which are mounted in such a way as to be capable of rotating about the common axis (20) which is directed transversely with respect to the direction of movement of the press, the rollers or similar members (22a, 22b, 22c) connecting said side members towards their periphery and bands or belts (12) passing around said rollers or like members.

4. A cylindrical bale press according to any one of claims 1 to 3 characterised in that there is provided a single set of endless belts or bands (12) passing around front direction-changing rollers (25, 29, 32) of the press and then around rollers (22a, 22b, 22c) or similar members of the transfer device (18) and around rearward rollers (33—37) of the press.

5. A cylindrical bale press according to any one of the preceding claims characterised in that the lower surface (13) is formed by a lower conveyor which extends over the length of the press between the front chamber (28) and the rear chamber (40), the bales (43, 48) resting on said conveyor during formation thereof in the front chamber (28) of the press, upon transfer thereof from said front chamber to the rear chamber (40) and upon binding thereof in said rear chamber.

6. A cylindrical bale press according to claim 5 characterised in that said lower conveyor (13) comprises a substantially horizontal upper run and that it extends from a point (14) just rearwardly of the pick-up device (6) of the press to the rear thereof.

7. A cylindrical bale press according to claim 5 or claim 6 characterised in that the front chamber (28) of the press is defined by the upper run of the lower conveyor (13), by the bands or belts of the transfer means in the portion thereof which extends between two rollers (22a, 22b) or similar members of the transfer device, and by bands or belts (12) which pass around direction-changing rollers (25, 29), at least one of which is displaceable to take account of the increase in diameter of the bale in the course of formation thereof.

8. A cylindrical bale press according to any one of claims 5 to 7 characterised in that the rear chamber (40) of the press is defined by the rearward part of the upper run of the lower conveyor (13), by the belts or bands of the transfer means in the portion thereof which extends between rollers (22a, 22c) or similar members of the transfer device, and by belts or bands (12) passing around direction-changing rollers (35, 36) provided on the rear gate system (10) of the press.

9. A cylindrical bale press according to any one of claims 4 to 8 characterised in that, for the front chamber, there is provided a displaceable roller (29) carried by pivotally mounted arms (30), at least one detector member (45) disposed in the path of movement of said arms (29) at the end of the travel thereof, and members connecting said detector member to the mechanism (21) for driving the transfer device (18) in rotation, to provide for angular displacement of said device by a step for transfer of a bale formed in the front chamber (28) of the press into the rear chamber (40) thereof, for binding and ejection thereof.

10. A cylindrical bale press according to claim 9 characterised in that means (47) are provided for detecting the transfer of a bale into the rear chamber (40) of the press in order to trigger the operation of binding said bale.

FIG. 1

**0 064 117**

FIG. 2

FIG. 3

2

FIG. 4

FIG. 5

FIG. 6

FIG. 7

4

FIG. 8

FIG. 9

FIG. 10

FIG. 11.

FIG. 12

FIG. 13

FIG. 14

FIG. 15